# EUROPEAN PATENT SPECIFICATION

(11) **EP 0 820 419 B1**
(45) Date of publication and mention of the grant of the patent: **14.07.1999**
(21) Application number: 96941002.6
(22) Date of filing: 03.12.1996
(51) Int. Cl.: B65G 53/46, B65G 53/60

(54) **AIR LOCK FOR PNEUMATIC CONVEYOR AND METHOD FOR SEPARATING SOLIDS FROM THE CONVEYING AIR**
LUFTSCHLEUSE FÜR EIN PNEUMATISCHES FÖRDERSYSTEM UND VERFAHREN ZUM ABSCHEIDEN VON FESTSTOFFEN AUS DER FÖRDERLUFT
SAS POUR CONVOYEUR PNEUMATIQUE ET PROCEDE DE SEPARATION DE MATIERES SOLIDES DE L'AIR DE TRANSPORT

(30) Priority: 04.12.1995 DK 137595
(43) Date of publication of application: 28.01.1998
(73) Proprietor: KRISTENSEN, Morten, 4720 Praesto (DK)
(72) Inventor: KRISTENSEN, Morten, 4720 Praesto (DK)
(74) Representative: Heiden, Finn
(86) International application number: DK9600504
(87) International publication number: WO9720761

(56) References cited:
- DE-B- 1 123 977
- GB-A- 1 122 882
- GB-A- 1 254 062
- US-A- 3 399 931

## Description

The present invention is concerned with pneumatic conveyors and more specifically with a separator for separating solids from the conveying air based on the principle of a rotary air lock. The invention is further concerned with a method for the separation of solids from the conveying air.

Pneumatic conveyors are understood here to mean conveyors wherein solid particles, grains or granulates are transported in a stream of air moving at sufficient velocity to keep the solids suspended. Conveyors may operate at pressures greater or less than ambient atmospheric pressure and, although reference is made throughout the present specification to air, they may in principle operate with any gas. Such conveyors can be used for moving e.g. straw, shavings, grains and feedstuffs, artificial fertilisers, sand, minerals, products used in the food industry, and plastics powders and granulates.

Such conveyors inevitably transport large quantities of air which, unless the air can actually be used in the next process, must be separated in a given step from the solids being moved. In many applications it is also necessary to provide an air lock so that the air pressure in the conveyor does not propagate to the next part of a processing plant. Locks may also be required to provide a fireproof separation in a conveyor.

Air locks are often implemented according to the so-called rotary air lock principle, wherein a cylindrical chamber is divided into cells by a rotor with blades, which by its rotation brings the cells enclosed by the blades into communication, alternately, with an inlet to and an outlet from the chamber. Devices of this type are also sometimes referred to as rotary valves. Such rotary air locks can be provided to effect fireproof and air proof separation and can also be used for material flow control, inasmuch as the volume transported can be controlled by varying the speed of rotation of the air lock. Rotary air locks in pneumatic conveyors are typically arranged with a horizontal axis of rotation, the inlet being located in the upper part of the cylindrical face and the outlet in the lower part, so that solids enter and leave the cells under the action of gravity.

A system is known on the market wherein the air and the solids are separated in a cyclone and a rotary air lock is located at the bottom of the cyclone to discharge the solids dropping down through the cyclone. The actual separation in the cyclone takes place around the cylindrical wall thereof, and thus the solids are delivered, in principle, around the circumference of a rather large circular section. The cyclone is fitted with a conical bottom which collects the material and leads it into a narrower section that is better adapted to the next equipment in the conveying path, in this case the rotary air lock. Because of the air lock in the bottom, there is no conveying air pressure in the conical part of the cyclone, and consequently the known system can be used only with materials which can flow freely down through the narrower section under their own weight. However, there are materials which do not meet this requirement, e.g. materials which are very light and prone to bridging in conveyor ducts, and which therefore cannot be separated in such systems.

There are on the market systems for the separation of conveying air and solids based on filtration through a filter which permits the air to pass through but retains the solids. There is on the market a rotary air lock combined with a filter, so constructed that an opening is located in a portion of the upper cylindrical face, which opening is in part covered by a filter that is swept by the edges of the rotor blades, the remainder of the opening being used to blow in conveying air carrying suspended solids.

In the known rotary air lock device the cells cannot be completely filled with solids, because the region below the feed opening cannot be filled and because the region occluded by the filter starts filling at the filter, where the air flow is quickly blocked by the build-up of material on the filter. The principle of operation of the known device permits material to be introduced to only one cell at a time. The flow resistance varies periodically with the rotation of the rotor, inasmuch as the area of filter with which a cell is in contact gradually increases, causing the air flow to gradually increase for a certain time, until it is quite abruptly cut off by a rotor blade occluding the feed opening. The flow resistance can also vary irregularly as parts of the filter get blocked by accumulated solids. Under any circumstances, variations in the flow resistance on the feed side are undesirable because they represent temporary poor efficiency, higher energy consumption, a source of noise, etc. Moreover, those portions of the cells that are close to the axis are practically impossible to fill.

The invention brings about a separator as stated in claim 1.

With this separator a very favourable flow pattern is achieved, where the flow resistance on the feed side displays practically no pulsation due to the passing of the rotor blades, and the filling of the cells is more complete in that those regions of the cells close to the axis are filled better than is possible in the known art.

According to a preferred embodiment of the invention, one of the end planes includes an area, corresponding to at least one cell, arranged as the feed opening, while the opposite end plane includes an area, corresponding to at least one cell and located axially opposite the first-mentioned area, fitted with a filter for the discharge of air. This embodiment achieves a flow pattern through the cells in a substantially axial direction, ensuring that the cells start filling with material at the end farther from the feed opening, gradually building up from there until the cell has either rotated away from the feed opening or is filled up. The separator according to the invention is also well-suited to materials having a significant tendency to bridging, since a bridge on the feed side will lead to the build-up of a pressure drop across the bridge which will force the bridge down towards the end farther from the feed opening.

According to a preferred embodiment of the invention, the areas of the feed opening, the end filter and cylindrical filter correspond to more than two cells. This embodiment provides a very large filter area in the rotary air lock and achieves very smooth alternation of the feed between the cells as the rotor blades sweep past the different openings.

According to a preferred embodiment of the invention, the discharge opening comprises an area of the cylindrical wall of the chamber corresponding to at least one cell. This provides optimal conditions for discharge in that there is a very low probability of the material bridging and being retained in the cell as the cell passes the discharge opening.

According to a preferred embodiment of the invention, the discharge opening comprises an area of one end wall of the chamber corresponding approximately to one cell. This embodiment is well-suited to applications in which the axis of the rotor is vertical and discharge can thus take place by gravity through the opening in the end wall. This embodiment is also suitable for combination with means for the forced discharge of the cell, e.g. by a piston, air blast, or similar.

The invention further brings about a pneumatic conveyor as stated in claim 10. This conveyor has advantages equivalent to those of the rotary air lock and has the additional advantage that it operates with recirculation of the conveying air, which simplifies handling and prevents problems with pollution, mixing between the conveyor and the environment, and similar problems.

The invention further brings about a method as stated in claim 11, whereby advantages are achieved equivalent to those explained above.

An embodiment of the invention will be presented in detail hereafter with reference to the attached drawings, where
- fig. 1: shows a longitudinal section through an air lock according to a first embodiment of the invention,
- fig. 2: shows a transverse section through the air lock of fig. 1,
- fig. 3: shows an end elevation of the air lock of fig. 1,
- fig. 4: shows a section through a pneumatic conveyor according to the invention,
- fig. 5: shows a longitudinal section through an air lock according to a second embodiment of the invention, and
- fig. 6: shows an end elevation of the air lock of fig. 5.

All the figures are highly schematic and not necessarily to scale, and they show only parts which are necessary in order to elucidate the invention, other parts being omitted or merely suggested. The same reference numbers are used in all figures for identical or corresponding parts.

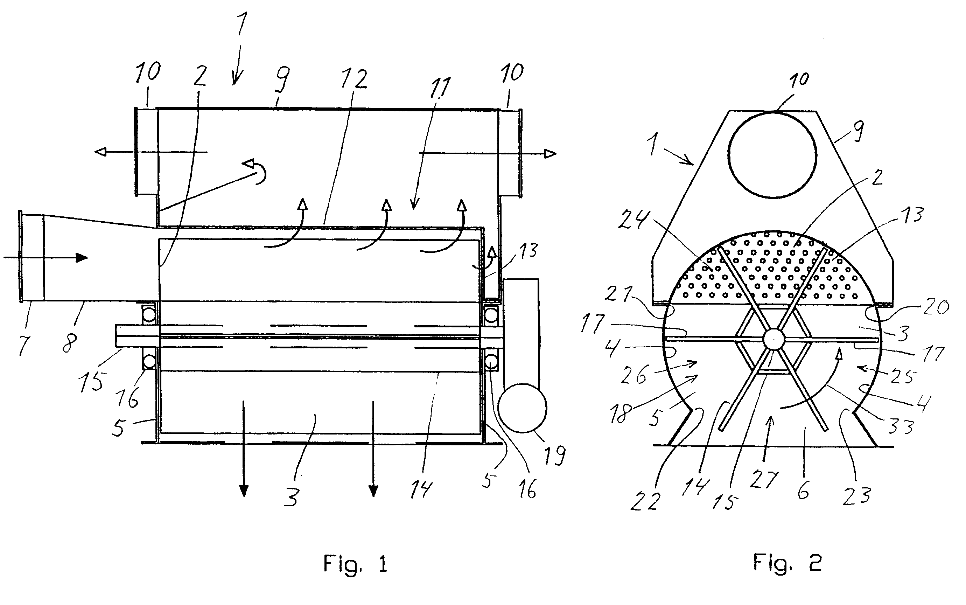

Reference is made first to figure 1 and figure 2, which show sections through an air lock according to the invention, said sections being respectively longitudinal and transverse with respect to the axis.

The air lock, denoted in its totality by reference number 1, comprises as basic components a rotor chamber 3, a rotor 14, a feed pipe 7 for conveying air and solids, an extract pipe 10 for air, and a discharge 6 for separated solids.

The rotor 14 consists of an axle 15, which rotates in bearings 16 driven by the motor 19, there being mounted on the axle a number of rotor blades 17 in the form of flat plates extending axially and radially. The blades 17 are equally spaced around the periphery of the rotor. In the illustrated example of embodiment there are six blades and they are arranged at mutual angular distances of 360° divided by six, i.e. 60°. The invention can equally well be implemented with rotors having other numbers of blades, as may be dictated by engineering considerations.

The rotor blades 17 are substantially airtight and arranged to fit snugly to the rotor axle 15, and they are moreover designed so that the rotor can rotate inside a cylinder, closed by flat end faces, wherein the blades sweep the end faces and the cylindrical face of the cylinder more or less snugly. The snug fit between the blades and the faces swept by them can be achieved by constructing the system with close tolerances or, if appropriate, by providing elastic gaskets on the edges of the blades, or by similar means as may be indicated by engineering considerations.

The air lock 1 according to the invention comprises, as is most clearly to be seen in figure 2, a rotor chamber 3 of cylindrical shape, part of the cylindrical face thereof consisting of a solid cylindrical wall 4, while another part thereof consists of a cylindrical filter 12, towards the top in figure 2, and another part towards the bottom is pierced to form an opening which serves as the particle discharge opening 6. The parts denoted by reference number 5 of the circular end planes of the cylinder are closed with solid end walls, while the upper part of the face shown on the right of figure 1 consists of an end filter 13, which is flush with the contiguous solid end wall 5. The upper part of the end face on the left of figure 1 is pierced to form a feed opening 2, which communicates via a connecting hood 8 with a feed pipe 7.

The rotor blades 17 enclose between them the separate cells 18, a cell being defined as the volume enclosed by two mutually adjacent rotor blades and by the cylindrical face and two end faces swept by the rotor blades.

The cylindrical filter 12 and the end filter 13 together constitute the effective filter 11 of the air lock. In the technical design of the filter regard is had to the materials to be handled and to the requirement for the filter surfaces to be swept by the rotor blades 17. The volume above the cylindrical filter 12 and for some distance beyond the end filter 13 is enclosed by a blow hood 9 which communicates with an air extract line 10.

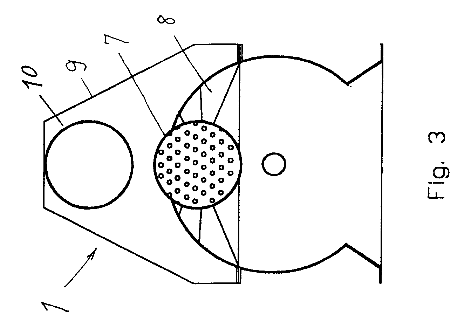

The connecting hood 8, as partially indicated in figure 3, is designed to have a uniformly increasing section from the feed pipe 7 to cover the feed opening 2 in the left end wall, see figure 1. The open part of this end wall corresponds to and is located opposite the end filter 13 on the right in figure 1.

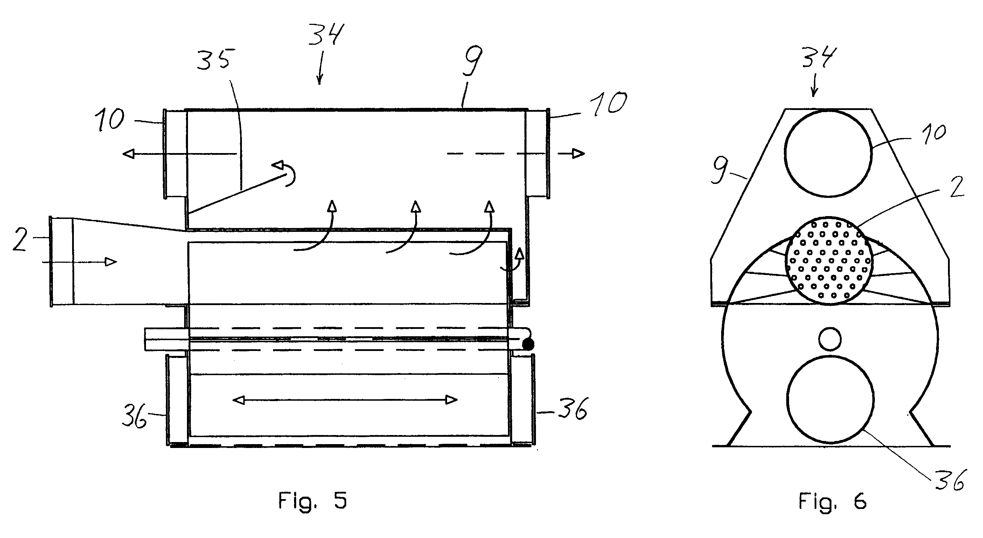

Reference is now made to figures 5 and 6 for a brief description of a second embodiment of the air lock according to the invention. The air lock according to this second embodiment is denoted in its totality by reference number 34 and is shown in figure 5 in axial section and in figure 6 in an end elevation. In this embodiment, as shown in figure 5, the air lock has inside the blow hood 9, towards the top of the figure, a deflector plate 35 which acts on the air stream by forming a barrier between the region of the feed opening 2 and the air extract line 10. This ensures a more uniform distribution of the air flow through the filter surface and also a uniform deposition of solids on the inside filter surfaces. In figure 5 the deflector plate 35 and the blow hood 9 are shown in schematic form, inasmuch as it will be clear to one skilled in the art how these components can be modified and adjusted to achieve desired distributions of the air stream with a view to securing e.g. good filter efficiency, uniform distribution, and minimum flow resistance in the system. The same applies, of course, to the air lock according to the first embodiment.

The air lock according to the second embodiment further differs from that of the first embodiment in the design of the particle discharge. While the air lock in the first embodiment had its particle discharge in the cylindrical face, the air lock 34 designed according to the second embodiment has a cylindrical face that is closed in the corresponding area, while outlet spigots 36 are fitted in holes axially opposed to each other in the two end planes. The particles can now discharge by gravity in cases where the air lock is set up standing on end, or they can be expelled by positive air pressure or suction in either direction if the two mutually opposed outlet spigots 36 are utilised. In other respects the air lock according to the second embodiment is essentially similar to that of the first embodiment, the only difference being that the discharge region 27 is defined by the extension of the two outlet spigots in the end faces and not by the size of an opening in the cylindrical face.

After the above explanation of design details, reference is again made to figures 1, 2 and 3 for a brief description of the mode of operation of the air lock.

During operation the rotor rotates as indicated by the arrow 33 in figure 2. In the course of said rotation a peripheral point of a rotor blade 17 moves as shown in figure 2 from the closing edge 23 of the outlet to the opening edge 20 of the filter, to the closing edge 21 of the filter, to the opening edge 22 of the outlet, and so on back to the closing edge 23 of the outlet. These points on the cylindrical face define corresponding regions of the space inside the rotor chamber, namely a blocking region 25 on the empty side between point 23 and point 20, an intake region 24 from point 20 to point 21, a blocking region 26 on the filled side from point 21 to point 22, and a discharge region 27 extending from point 22 to 23.

During operation, air under positive pressure containing suspended solids is blown in through the feed line 7 and the connecting hood 8 and after passing through the intake opening 2 reaches the rotor in the intake region 24. Here, as indicated in figure 1, the air is free to escape through the cylindrical filter 12 and the end filter 13 and passes via the blow hood 9 into the air extract line 10. The solids are retained on the inside of the filter and scraped off by the rotor blades and thus move from the intake region 24, through the blocking region 26 on the filled side, into the discharge region 27.

Each of the blocking regions 25 and 26 has an angular extension at least equal to the angle between two rotor blades plus an amount approximately equal to the thickness and possible play of the edges of the rotor blades, including gaskets if any. Thus there will at any time be one rotor blade in each of the blocking regions, ensuring an airtight separation between the intake region 24 and the discharge region 27. When the cells 18 reach the discharge region 27, they are therefore in practice sealed off from the air circulation, which passes through the feed line 7 and the connection hood 8 into the intake region 24 of the rotor chamber and further via the blow hood 9 to the extract line 10.

The discharge region will preferably have an angular extension equal approximately to the width of one cell. That part of the rotor chamber occupied by the discharge opening and by the two blocking regions thus corresponds approximately to the width of three cells plus a tolerance. In the illustrated embodiment with six rotor blades, close to half of the circumference of the rotor chamber can be utilised for filter surfaces.

The mode of operation of the air lock according to the second embodiment is essentially similar to the mode of operation of the air lock according to the first embodiment, and reference may therefore be made to the explanation given above. The air lock according to the second embodiment is particularly suitable for operation with forced evacuation of the discharge area, such forced evacuation being effected e.g. by positive-pressure air blown in through one of the outlet spigots, or by suction applied through one of the outlet spigots while air is admitted through the opposite spigot. In this way pneumatic conveyors can be implemented in which solids are moved across a pressure barrier or possibly from an area using one conveying gas to an area using a different conveying gas.

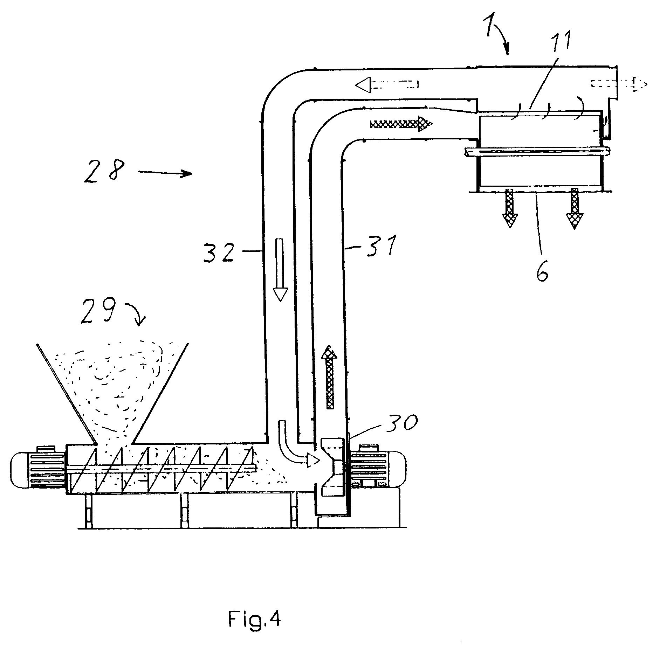

Reference is now made to figure 4, which shows a conveyor system 28 according to the invention. This conveyor system comprises a screw conveyor 29, which receives solids and conveys them to a blower 30, which sucks in air and solids and impels them via a pressurised air line 31 to an air lock 1 according to the invention, where the solids are discharged downwards while filtered air is returned via a vacuum line 32 to the suction side of the blower 30. By this means solids are conveyed from the screw conveyer to the air lock discharge. The system can be directly modified to use the air lock 34 according to the above-mentioned second embodiment.

While the invention is described above sufficiently clearly for one skilled in the art to be able to create practical embodiments thereof, the present specification is exclusively intended to exemplify and not in any way to limit the scope of the invention, which is defined by the attached claims alone.

## Claims

1. A separator for separating solids from conveying air in a pneumatic conveyor, which separator (1) comprises a substantially cylindrical chamber (3) and a rotor (14) with blades (17) which are caused to rotate in the cylindrical chamber and which sweep the interior faces (4, 5) of the chamber and divide the interior of the chamber into separate cells of approximately equal size,
which cylindrical chamber comprises two end faces (5) and a cylindrical face (4),
wherein there is provided in one or more of said faces, respectively, an intake opening (2), a discharge opening (6) for discharging separated solids, and a filter for the escape of air and the retention of solids,
wherein the intake opening and the filter are so arranged that each cell, throughout a certain angular range of the rotation of the rotor is in simultaneous communication with the intake opening and the filter,
wherein the discharge opening is so arranged that the rotor in all its rotational positions establishes an airtight barrier between the discharge opening (6) on the one hand and the intake opening (2) and filter on the other hand,
wherein the filter is swept of solids by the rotor blades (17), and wherein at least an area of one of the end faces, covering at least one cell, is utilised for the inward passage of air, by having the intake opening include said area.

2. A separator according to claim 1, characterised in that the filter (11) includes an area of one of the end faces covering at least one cell.

3. A separator according to claim 1, characterised in that the filter (11) includes an area of the cylindrical face (4) of the chamber covering at least one cell.

4. A separator according to claim 1, characterised in that one of the end faces (5) includes an area, equal to at least one cell, which is arranged as the intake opening (2), and the opposed end face includes an area, equal to at least one cell and located axially opposite the first-mentioned area, which is provided with a filter (13) for the escape of air.

5. A separator according to claim 1, characterised in that the areas of the intake opening, the end filter (13) and the cylindrical filter (12) correspond to more than two cells.

6. A separator according to claim 1, characterised in that the discharge opening comprises an area of the cylindrical face (3) of the chamber corresponding to at least one cell.

7. A separator according to claim 1, characterised in that the discharge opening (6) comprises opposed areas of the end faces (3) of the chamber.

8. A separator according to claim 1, characterised in that it includes a blow hood (9) above the filter (11), optionally having means for deflecting the air stream and with an axially oriented extract line (10) at the same end as the intake opening (2).

9. A pneumatic conveyor (28) comprising a feed device for solids, a blower (30), a conveying line, a separator according to any of the preceding claims, and a vacuum line (32) for returning air from the separator (1) to the blower (30).

10. A method for the separation of solids from conveying air in a pneumatic conveyor,
wherein the conveying air with the solids is blown into a chamber lengthwise along a wall face equipped with a filter for the retention of the solids, and against a transverse wall face, equipped with a similar filter, at the opposite end of the chamber,
wherein both filters are swept by plates which move transversely to the direction of the air stream and displace the solids from the filter surfaces into a region of the chamber bounded by airtight walls, where the moving plates block the access of air, and
wherein the solids are displaced onwards through the chamber to a point where there is an opening in the wall of the chamber for the discharge of particulate material.

## Patentansprüche

1. Trennvorrichtung zum Abtrennen von Feststoffen aus Förderluft in einer pneumatischen Fördereinrichtung, welche Trenneinrichtung (1) eine im wesentlichen zylindrische Kammer (3) und einen Rotor (14) mit Blättern (17) aufweist, die in der zylindrischen Kammer in Drehung versetzt werden und welche die Innenseite (4, 5) der Kammer überstreichen und das Innere der Kammer in separate Zellen ungefähr gleicher Größe aufteilen,
welche zylindrische Kammer zwei Stirnseiten (5) und eine zylindrische Fläche (4) aufweist,
wobei an einer oder mehreren der Seiten jeweils eine Aufnahmeöffnung (2), eine Entladeöffnung (6) zu Entladung der abgetrennten Feststoffe und ein Filter zum Entweichen von Luft und zum Zurückhalten der Feststoffe vorgesehen sind, wobei die Aufnahmeöffnung und der Filter so angeordnet sind, daß jede Zelle über einen gewissen Winkelbereich der Drehung des Rotors in gleichzeitiger Verbindung mit der Aufnahmeöffnung und dem Filter ist,
wobei die Entladeöffnung so angeordnet ist, daß der Rotor in allen Drehpositionen eine luftdichte Barriere zwischen der Entladeöffnung (6) auf der einen Seite und der Aufnahmeöffnung (2) und dem Filter (11) auf der anderen Seite bildet,
wobei die Rotorblätter (17) den Filter von Feststoffen abstreichen und wobei wenigstens ein Bereich einer der Stirnflächen, der wenigstens eine Zelle abdeckt, dadurch, daß die Eingangsöffnung diesen Bereich umfaßt, zum Ein von Luft verwendet wird.

2. Trennvorrichtung gemäß Anspruch 1,
**dadurch gekennzeichnet,** daß der Filter (11) einen Flächenbereich wenigstens einer der Stirnseiten einnimmt, der wenigstens eine Zelle abdeckt.

3. Trennvorrichtung gemäß Anspruch 1,
**dadurch gekennzeichnet,** daß der Filter (11) einen Flächenbereich der zylindrischen Fläche (4) der Kammer einnimmt, der wenigstens eine Zelle abdeckt.

4. Trennvorrichtung gemäß Anspruch 1,
**dadurch gekennzeichnet,** daß eine der Stirnseiten (5) einen Flächenbereich gleich wenigstens einer Zelle einnimmt, der als Aufnahmeöffnung (2) angeordnet ist, und die gegenüberliegende Stirnseite einen Flächenbereich gleich wenigstens einer Zelle und axial gegenüber dem erstgenannten Bereich angeordnet einnimmt, der mit einem Filter (13) zum Entweichen von Luft versehen ist.

5. Trennvorrichtung gemäß Anspruch 1,
**dadurch gekennzeichnet,** daß die Flächenbereiche der Aufnahmeöffnung, des Endfilters (13) und des zylindrischen Filters (12) mehr als zwei Zellen entsprechen.

6. Trennvorrichtung gemäß Anspruch 1,
**dadurch gekennzeichnet,** daß die Entladeöffnung einen Flächenbereich der zylindrischen Fläche (3) der Kammer entsprechend wenigstens einer Zelle einnimmt.

7. Trennvorrichtung gemäß Anspruch 1,
**dadurch gekennzeichnet,** daß die Entladeöffnung (6) gegenüberliegende Flächenbereiche der Stirnseiten (3) der Kammer einnimmt.

8. Trennvorrichtung gemäß Anspruch 1,
**dadurch gekennzeichnet,** daß sie eine Gebläsehaube (9) über dem Filter (11) aufweist, optional Mittel zur Ablenkung des Luftstroms aufweist und mit einer axial orientierten Extraktionsleitung (10) am gleichen Ende wie die Aufnahmeöffnung (2) versehen ist.

9. Pneumatische Transportvorrichtung (28) mit einer Fördereinrichtung für Feststoffe, einem Gebläse (30), einer Förderleitung, einer Trenneinrichtung gemäß einem der vorangehenden Ansprüche und einer Vakuumleitung (32) zur Rückführung von Luft von der Trenneinrichtung (1) zu dem Gebläse (30).

10. Verfahren zur Trennung von Feststoffen von Förderluft in einer pneumatischen Fördereinrichtung,
wobei die Förderluft mit den Feststoffen in eine Kammer längs entlang einer mit einem Filter zum Zurückhalten der Feststoffe versehenen Wandseite und gegen eine senkrechte Wandseite an dem gegenüberliegenden Ende der Kammer geblasen wird, die mit einem ähnlichen Filter versehen ist,
wobei beide Filter mittels Platten abgestrichen werden, die sich senkrecht zur Richtung des Luftstroms bewegen und die Feststoffe von den Filterflächen in einen Bereich der Kammer versetzen, der durch luftdichte Wände verbunden ist, wobei die sich bewegenden Platten den Luftzugang blockieren, und
wobei die Feststoffe vorwärts durch die Kammer zu einem Punkt versetzt werden, wo eine Öffnung in einer Wand der Kammer zum Entladen des betreffenden Materials vorhanden ist.

## Revendications

1. Séparateur destiné à séparer des matières solides de l'air de transport dans un convoyeur pneumatique, lequel séparateur (1) comprend une chambre (3) sensiblement cylindrique et un rotor (14) à ailettes (17) que l'on fait tourner dans la chambre cylindrique et qui balaient les faces intérieures (4, 5) de la chambre et qui divisent l'intérieur de la chambre en cellules distinctes ayant des tailles approximativement égales,
laquelle chambre cylindrique comprend deux faces (5) d'extrémité et une face cylindrique (4),
dans lequel, dans l'une ou plusieurs desdites faces, sont respectivement prévus une ouverture (2) d'entrée, une ouverture (6) de décharge pour décharge de matières solides séparées, et un filtre (11) pour l'échappement d'air et la retenue de matières solides,
dans lequel l'ouverture d'entrée et le filtre sont agencés de façon que chaque cellule, sur toute une certaine plage angulaire de la rotation du rotor, soit en communication simultanément avec l'ouverture d'entrée et le filtre,
dans lequel l'ouverture de décharge est agencée de façon que le rotor, dans toutes ses positions en rotation, établisse une barrière étanche à l'air entre l'ouverture (6) de décharge d'une part et l'ouverture (2) d'entrée et le filtre (11) d'autre part,
dans lequel le filtre est débarrassé de matières solides par les ailettes (17) de rotor, et dans lequel on utilise au moins une zone de l'une des faces d'extrémité, couvrant au moins une cellule, en tant qu'admission d'air, du fait que l'ouverture d'entrée comprend ladite zone.

2. Séparateur selon la revendication 1, caractérisé en ce que le filtre (11) comprend une zone de l'une des faces d'extrémité couvrant au moins une cellule.

3. Séparateur selon la revendication 1, caractérisé en ce que le filtre (11) comprend une zone de la face cylindrique (4) de la chambre couvrant au moins une cellule.

4. Séparateur selon la revendication 1, caractérisé en ce que l'une des faces (5) d'extrémité comprend une zone, égale à au moins une cellule, qui est agencée en tant qu'ouverture (2) d'entrée, et en ce que la face d'extrémité opposée comprend une zone, égale à au moins une cellule, et située axialement opposée à la première zone mentionnée, qui est pourvue d'un filtre (13) pour l'échappement d'air.

5. Séparateur selon la revendication 1, caractérisé en ce que les zones de l'ouverture d'entrée, du filtre (13) d'extrémité et du filtre cylindrique (12) correspondent à plus de deux cellules.

6. Séparateur selon la revendication 1, caractérisé en ce que l'ouverture de décharge comprend une zone de la face cylindrique de la chambre (3) correspondant à au moins une cellule.

7. Séparateur selon la revendication 1, caractérisé en ce que l'ouverture (6) de décharge comprend des zones opposées des faces d'extrémité de la chambre (3).

8. Séparateur selon la revendication 1, caractérisé en ce qu'il comprend un capot (9) de soufflerie situé au-dessus du filtre (11), comportant, de façon optionnelle, des moyens destinés à dévier le courant d'air, et muni d'une canalisation (10) d'extraction orientée axialement au niveau de la même extrémité que l'ouverture (2) d'entrée.

9. Convoyeur pneumatique (28) comportant un dispositif d'alimentation en matières solides, une soufflerie (30), une canalisation de transport, un séparateur selon l'une quelconque des revendications précédentes, et une canalisation à vide (32) pour renvoyer l'air du séparateur (1) vers la soufflerie (30).

10. Procédé de séparation de matières solides de l'air de transport dans un convoyeur pneumatique,
dans lequel l'air de transport avec les matières solides est soufflé dans une chambre longitudinalement à une face de paroi équipée d'un filtre de retenue des matières solides, et contre une face de paroi transversale, équipée d'un filtre similaire, à l'extrémité opposée de la chambre,
dans lequel les deux filtres sont balayés par des ailettes qui se déplacent transversalement à la direction du courant d'air et qui déplacent les matières solides des surfaces de filtre dans une région de la chambre délimitée par des parois étanches à l'air, où les ailettes mobiles bloquent l'accès d'air, et
dans lequel les matières solides sont déplacées en avant à travers la chambre vers un point où se trouve une ouverture dans la paroi de la chambre pour la décharge d'une matière particulaire.
